# EUROPÄISCHE PATENTSCHRIFT

(11) **EP 1 861 649 B1**
(45) Veröffentlichungstag und Bekanntmachung des Hinweises auf die Patenterteilung: **07.10.2009**
(21) Anmeldenummer: 06722664.7
(22) Anmeldetag: 22.03.2006
(51) Int. Cl.: F16L 59/12, F16L 59/135

(54) **KÄLTEISOLIERTES FESTPUNKT-ROHRLAGER**
COLD-INSULATED FIXED-POINT PIPE SUPPORT
PORTE-TUYAU A POINT DE FIXATION ET ISOLE A FROID

(30) Priorität: 22.03.2005 DE 102005013728
(43) Veröffentlichungstag der Anmeldung: 05.12.2007
(73) Patentinhaber: Lisega Aktiengesellschaft, 27404 Zeven (DE)
(72) Erfinder: LANGE, Heinz-Wilhelm, 27404 Zeven (DE); CHALLENOR, Ashley, Perth, W.A. 6015 (AU)
(74) Vertreter: Lippert, Hans-Joachim
(86) Internationale Anmeldenummer: PCT/DE2006/000511
(87) Internationale Veröffentlichungsnummer: WO 2006/099855

(56) Entgegenhaltungen:
- EP-A- 0 518 227
- DE-C1- 10 045 010
- US-A- 3 891 006
- US-A- 4 804 158
- US-A- 5 924 656
- US-A1- 2005 253 024
- HAACK T: "ROHRBEFESTIGUNG MIT VORISOLIERTEN ROHRLAGERN" CHEMIETECHNIK, HUTHIG, HEIDELBERG, DE, Bd. 21, Nr. 7, 1. Juli 1992 (1992-07-01), Seite 24,26, XP000307945 ISSN: 0340-9961

## Beschreibung

Die Erfindung betrifft ein kälteisoliertes Festpunkt-Rohrlager für eine Rohrleitung, insbesondere für eine Tieftemperaturrohrleitung, das zur Aufnahme und Weitergabe axial und radial wirkender Rohrleitungskräfte und -Momente auf der Rohrleitung sowie auf einer Basis fixierbar ist, mit einem zwischen Außenschale und lagerbarer Tieftemperaturrohrleitung angeordneten Isoliersystem, das eine Wärmedämmung aus festem Isolationswerkstoff aufweist und die lagerbare Tieftemperaturrohrleitung thermisch von der Umgebung isoliert, und mit einer Verdreh- und Verschiebesicherung gegen ein Verdrehen und Verschieben der Wärmedämmung bezüglich der lagerbaren Tieftemperaturrohrleitung und der Außenschale, welche eine äußere Aufnahme (12) und eine innere Aufnahme (13) für das Isoliersystem (3) aufweist, wobei die äußere Aufnahme (12) fest mit der Außenschale (2) und die innere Aufnahme (13) in Arbeitslage fest mit der Rohrleitung (A) verbunden ist, das Festpunkt-Rohrlager (1) in einer im wesentlichen radialen Montagerichtung (a) über die Rohrleitung (A) montier- und demontierbar ist, das Festpunkt-Rohrlager (1) mindestens eine Formteilung aufweist, deren Teilungsebene (E) senkrecht zur Querschnittsebene verläuft, und das Festpunkt-Rohrlager (1) eine Verbindungsvorrichtung zur lösbaren Verbindung und Fixierung der durch die Formteilung gebildeten Formteile miteinander aufweist.

Festpunkt-Rohrlager werden insbesondere an Abschnitten der Rohrleitung als Ankerpunkte eingesetzt, wo möglichst sämtliche, durch den Rohrleitungsverlauf aufgebaute, mechanische Kräfte und Momente aufgenommen werden sollen, um die Rohrleitung hieran anschließend entsprechend kräftefrei beispielsweise an ein Aggregat, wie eine Pumpe, anschließen zu können.

Ein Festpunkt-Rohrlager der eingangs beschriebenen Art wird in der US4,804,158 offenbart. Hier werden aufwändig Rippenelemente zur Aufnahme umfänglicher und axialer Kräfte zum Teil nach erfolgtem Zusammenbau des Festpünkt-Rohrlagers mit demselben fest verbunden.

Ein weiteres Festpunkt-Rohrlager wird beispielsweise in der US3,891,006 beschrieben. Hierbei wird die Wärmedämmung zwischen Rohrleitung und Außenschale eingespritzt oder als vorgefertigtes Bauteil endseitig über einen Rohrabschnitt aufgeschoben. Wegen des komplexen Aufbaus wird ein derartiges Festpunkt-Rohrlager in der Regel bereits fabrikseitig mit einem innen liegenden Rohrleitungsabschnitt vorgefertigt und vor Ort in eine Rohrleitung eingefügt. Hierzu muss in der Praxis häufig entweder der Rohrleitungsbau solange gestoppt werden, bis das geeignete Festpunkt-Rohrlager vor Ort einsetzbereit ist, oder aus einer vorhandenen Rohrleitung ein entsprechender Abschnitt herausgenommen, das Festpunkt-Rohrlager eingesetzt und die Rohrleitung anschließend einer zumeist erneuten, zusätzlichen Druckprüfung und/oder zerstörungsfreien Prüfung unterzogen werden. Ähnlich muss zum Austausch eines Festpunkt-Rohrlager das defekte Festpunkt-Rohrlager aus der Rohrleitung herausgetrennt werde, um anschließend das neue Festpunkt-Rohrlager an diese Stelle wieder einzuschweißen, ein sehr aufwendiges Verfahren, welches wiederum eine erneute Rohrleitungsdruckprüfung und/oder zerstörungsfreie Prüfung erfordert. Insgesamt ist somit die Montage und Demontage eines Festpunkt-Rohrlagers aufwendig und kann sich leicht Zeit verzögernd auf die Montage einer kälteisolierten Rohrleitung, insbesondere einer Tieftemperaturrohrleitung auswirken.

In dem in der US 2005/0253024 A1 beschriebenen Festpunkt-Rohrlager wird ebenfalls die Wärmedämmung zwischen Rohrleitung und Außenschale eingespritzt.

Aufgabe der Erfindung ist daher, die Montage und Demontage eines Festpunkt-Rohrlagers der eingangs genannten Art in eine bzw. von einer Rohrleitung, insbesondere in eine bzw. von einer Tieftemperaturrohrleitung, zu vereinfachen.

Erfingdungsgemäß wird die gestellte Aufgabe dadurch gelöst, dass die Aufnahmen jeweils mindestens zwei von einander beabstandet angeordnete umfängliche Rippen und vier über den Umfang gleichmäßig verteilt angeordnete axiale Rippen aufweisen, wobei die axialen Rippen mit ihren Stirnseiten jeweils an einer Seitenfläche der umfänglichen Rippen anliegen und fest damit verbunden sind, und dass die Aufnahmen jeweils in zwei Aufnahmehälften geteilt sind, wobei ihre jeweilige Teilungsebene senkrecht zur Querschnittsebene verläuft und die Längsachse der Aufnahmen enthält.

Durch die miteinander verbundenen Rippen kann die Stabilität der Aufnahmen verbessert werden und können die auftretenden Kräfte unter einem Werkstoff-verträglichen Druck in das Isoliersystem eingeleitet werden. Somit wird die Verwindungssteifigkeit gesteigert. Die gleichmäßige Anordnung der vier über den Umfang verteilten axialen Rippen impliziert bei der inneren und der äußeren Aufnahme einen Mittelpunktswinkelabstand von 90°.

Durch die Teilung kann die innere Aufnahme leichter auf die Rohrleitung angebracht werden und die äußere Aufnahme leichter in die geteilte Außenschale eingebracht werden. Somit kann die innere Aufnahme seitlich auf den betreffenden Rohrabschnitt aufgesetzt und zusammengefügt werden, wobei die Rippen mit dem Rohrleitungsabschnitt vorzugsweise verschweißt werden. Desgleichen können die stirnseitig aneinander grenzenden Flächen der inneren Aufnahme miteinander verschweißt werden.

Durch die Formteilung des Festpunkt-Rohrlagers ist dasselbe in situ über eine bereits montierte Rohrleitung in radialer Richtung oder in im wesentlichen radialer Richtung aufschieb-, aufzieh- oder aufsteckbar, sodass der Einbau des Festpunkt-Rohrlagers zeitlich flexibel erfolgen kann, ohne den Leitungsbau mit einer weiteren Druckprobe zu verzögern. Hierbei können ihre Formteile über die Verbindungsvorrichtung über der Rohrleitung zusammengehalten und gegen die Rohrleitung vorzugsweise einstellbar gepresst werden bzw. über eine Lösung der Verbindungsvorrichtung wieder von der Rohrleitung abgenommen werden. Dringt Luftfeuchtigkeit in das Isoliersystem ein, so gefriert diese bei Tieftemperaturrohrleitungen und kann hierbei das Isoliersystem zerstören, sodass es ausgetauscht werden muss. Hierzu musste bei herkömmlichen Festpunkt-Rohrlagern das gesamte Lager mit dem durch das Festpunkt-Rohrlager geführten Rohrleitungsabschnitt aus der Rohrleitung herausgeschnitten, ausgetauscht, eingeschweißt und einer erneuten Druckprüfung unterzogen werden. Dies entfällt bei dem erfindungsgemäßen Festpunkt-Rohrlager, da es mit seiner Außenschale und seiner Wärmedämmung bzw. seines Isoliersystems lösbar auf der Rohrleitung befestigt ist.

Zum leichteren Aufbringen bzw. Abziehen des Festpunkt-Rohrlagers und zur Vereinfachung des Festpunkt-Rohrlageraufbaus sollte die Formteilung so gewählt werden, dass das Festpunkt-Rohrlager bezüglich einer Montagerichtung beim Aufschieben bzw. Loslösen keine Hinterschneidungen aufweist. Hierzu sollte zweckmäßigerweise die Längsachse des Festpunkt-Rohrlagers in der Teilungsebene liegen. Eine weitere Vereinfachung kann erzielt werden, indem Wärmedämmung und Außenschale eine gemeinsame Teilungsebene aufweisen.

Vorzugsweise kann die Wärmedämmung zwei Halbkreisschalen aufweist, deren in Teilungsebene liegenden Seitenflächen über eine Fuge aneinandergrenzen. Über diese Fuge können thermisch bedingte Volumenänderungen der Wärmedämmung und/oder der Außenschale ausgeglichen werden. Diese Volumenänderungen können hierbei, bedingt durch den vorhandenen radialen Wärmegradienten, entsprechend verteilt über den Radius auftreten. Um zu verhindern, dass Luftfeuchtigkeit in die Fuge eindringt, die aufgrund ihrer Vereisung zumindest zu einer partiellen Zerstörung der Wärmedämmung führen würde, wird vorgeschlagen, dass die Fuge mit einer elastischen Dichtungsmasse gefüllt ist.

Um die Gefahr eines Eindringens von Luftfeuchtigkeit in die Fuge weiter zu minimieren, kann die Fuge aus mehreren abgestuften radialen und axialen Teilfugen aufgebaut sein, wobei die radialen Teilfugen mit einer elastischen Dichtungsmasse gefüllt sind und die in den axialen Teilfugen angrenzenden Seitenflächen der Schalen aneinander anliegen. Hierdurch wird der direkte Zugang von Luftfeuchtigkeit in die Fuge versperrt. Hierzu können die umfänglichen, die Fuge begrenzenden Seitenflächen der Teilstücke bzw. der Hälften der Wärmedämmung einen stufigen Aufbau aufweisen, der, die axialen und radialen Teilfugen bildend, ineinander greift.

In einer bevorzugteren Weiterbildung des abgestuften Aufbaus der Fuge kann an dem radial äußeren Ende der Fugen jeweils eine stufenförmige, vorzugsweise zu beiden Seiten der Fuge hin eingebrachte Fugenverbreiterung vorgesehen sein, in die ein weiteres, der Fugenverbreiterung angepasstes und sich gleich der Fuge in axialer Richtung erstreckendes Teilstück der Wärmedämmung eingesetzt ist. Hierdurch überdeckt das Teilstück den radial innen liegenden und verbreiterten Abschnitt der Teilungsfuge nach außen hin und versperrt der Luftfeuchtigkeit und anderen Umgebungsmedien den direkten Weg in die Teilungsfuge. Vorzugsweise liegt das Teilstück mit einer seiner beiden umfänglichen Seitenflächen an der dieser Seitenfläche gegenüberliegenden Seitenfläche der übrigen Wärmedämmung an, während es mit seiner anderen umfänglichen Seitenfläche und der entsprechend gegenüberliegenden Seitenfläche der Wärmedämmung eine radiale Teilfuge einschließt. Vorzugsweise ist diese Teilfuge ebenfalls mit einer elastischen Dichtungsmasse gefüllt.

Um einen optimierten Anschluss an das Isolationssystem der Rohrleitung an das Festpunkt-Rohrlager zu gewährleisten, wird vorgeschlagen, dass die Wärmedämmung in einer Weiterbildung des Festpunkt-Rohrlagers in axialer Richtung über der Außenschale übersteht. Hierbei kann der Anschluss an das Isolationssystem der Rohrleitung dahingehend verbessert werden, dass ein bevorzugt stufiger Aufbau der angrenzenden Stirnflächen zur Erzeugung von entsprechend abgestuften radialen und axialen Teilfugen vorgesehen ist, um auf diese Weise einen direkten Zugang von Luftfeuchtigkeit zu verhindern. Zudem kann vorgesehen sein, dass die radialen Teilfugen mit elastischer Dichtungsmasse gefüllt sind.

Um beispielsweise den stufigen Aufbau der Stirnfläche einfacher herzustellen, kann vorgesehen sein, dass die Wärmedämmung einen mehrschaligen, koaxialen Aufbau aufweist, wobei die radiale Dicke und axiale Erstreckung der einzelnen Schalen bevorzugt an den stufenartigen Aufbau angepasst sind.

Vorzugsweise ist die Wärmedämmung aus einem vorgefertigten Polyurethan-Schaumstoffblock geschnitten. Der Polyurethan-Schaumstoff kann in einer anderen Verfahrensvarianten auch direkt in die vorgesehene einstückige Form geschäumt werden. In beiden Fällen kann der vorgefertigte Polyurethan-Schaumstoffblock bzw. die einstückige Form nach ihrem Schäumen zum Aushärten und zum Abbau von inneren Spannungen ausgelagert werden. Vorzugsweise werden hierbei Polyurethan-Schaumstoffblöcke mit hoher Dichte (Polyurethane Foam High Density bzw. PUF-HD) eingesetzt, um hierüber größere Kräfte aufnehmen zu können, die entsprechend bei einer größeren Rohrleitung zu erwarten sind.

Um die Wärmedämmung bzw. das Isoliersystem mit dem durch das Festpunkt-Rohrlager gehenden Abschnitt der Rohrleitung sowie mit der Außenschale fest zu verbinden, wird erfindungsgemäß vorgeschlagen, dass die Verdreh- und Verschiebesicherung eine äußere Aufnahme und eine innere Aufnahme für das Isoliersystem aufweist, wobei die äußere Aufnahme fest mit der Außenschale und die innere Aufnahme in Arbeitslage fest mit der Rohrleitung verbunden ist. Durch die innere Aufnahme sollen radiale und axiale Kräfte sowie Kräftemomente um die Längsachse der Rohrleitung von der rohrleitung auf das Isoliersystem übertragen werden, das diese Kräfte über äußere Aufnahme in die mit der Basis verbundenen Außenschale weiterleitet. Eine Aufnahme von Biegemomenten um eine Biegeachse in Querschnittsebene wird vornehmlich durch eine ausreichende axiale Länge des Festpunkt-Rohrlagers erzielt.

Bevorzugt weisen die Aufnahmen jeweils mindestens eine umfänglich verlaufende Rippe und mindestens eine axial verlaufende Rippe auf. Ferner ist das Isoliersystem mit an die Rippen angepassten Ausnehmungen versehen, in die die Rippen in Einbaulage eingreifen. Bevorzugt greifen die Rippen vollständig und so weit ein, dass die Rippen bis an oder nahe bis an den Aufnahmegrund hinein in die Ausnehmung hineinragen. Entsprechend dem koaxialen Aufbau des Festpunkt-Rohrlagers wird vorgeschlagen, dass sich die Rippen der äußeren Aufnahme radial nach innen und die Rippen der inneren Aufnahme radial nach außen erstrecken. Die einzelnen Rippen der inneren Aufnahme können jedoch zu ihrer Montage auch einzeln auf das Rohr aufgeschweißt werden. Um schweißtechnisch ungünstige Ecken- oder Zwickelschweißungen zu vermeiden, können die axialen Rippen in einer anderen Variante mit einer bestimmten stirnseitigen Distanz zu den umfänglichen Rippen auf der Rohrleitung befestigt sein. Um das Wärmeeinbringen in die Rohrleitung durch das Aufschweißen der Rippen zu vermindern, kann auch vorgesehen sein, dass lediglich mindestens umfängliche und/oder mindestens eine radiale Rippen mit der Rohrleitung verschweißt sind, wobei die unverschweißten lippen dann zur ihrer Halterung mit mindestens einer mit der Rohrleitung verschweißten Rippe verschweißt sind. Die innere Aufnahme selbst kann bei einem Auswechseln des Isoliersystems bzw. der Wärmedämmung und/oder der Außenschale, die beispielsweise an eine andere Basis angeschweißt werden soll, auf der Rohrleitung verbleiben.

Um die Bildung einer Hinterschneidung bezüglich der Wärmedämmung zu vermeiden, kann jeweils eine der umfänglichen, in der Teilungsebene liegenden Stirnflächen der Aufnahmeteile der inneren und/ oder äußeren Aufnahme durch eine ihrer axialen Rippen gebildet werden. Hierdurch trifft die Fuge zwischen den Halbschalen der Wärmedämmung radial nach innen bzw. radial nach außen jeweils eine axiale Rippe, wodurch die Stabilität verbessert und der.direkte.Zugang von außen in die Fuge zumindest erschwert wird.

Vorzugsweise sind jedoch die axialen Rippen der äußeren Aufnahme in einem Mittelpunktswinkelabstand von 45° zur Teilungsebene angeordnet. Damit sind die axialen Rippen in Einbaulage um 45° versetzt zu den axialen Rippen der inneren Aufnahme in dem Festpunkt-Rohrlager angeordnet. Zur Vermeidung von Hinter schneidungen können die axialen Rippen der äußeren Aufnahme hierbei als gleichschenkliges, rechtwinkliges Winkelprofil ausgebildet sein, wobei die beiden Schenkel des Winkelprofils mit ihren freien Enden mit der Innenseite der Außenschale verbunden sind und unter Einschließung eines Hohlraumes zwischen Winkelprofil und Innenseite der Außenschale radial nach innen zusammenlaufen. Damit verlaufen die äußeren, zur Wärmedämmung hinweisenden Flächen des Winkelprofils jeweils senkrecht oder parallel zur Teilungsebene des äußeren Profils und der Außenschale, sodass trotz der um 45° versetzten Lage der axialen Rippen durch die axialen Rippen keine Hinterschneidung gebildet wird. Somit können die Hälften der äußeren Aufnahme senkrecht zur Teilungsebene auf die Wärmedämmung gebracht oder von der Wärmedämmung abgezogen werden, ohne die Wärmedämmung zu beschädigen oder ohne dass zusätzliche Formteile zum Ausfüllen von Hinterschneidungen benötigt werden. Der entstehende Hohlraum zwischen Winkelprofil und Innenseite der Außenschale ist bevorzugt mit wärmeisolierendem Kunststoff ausgeschäumt. Hierbei wird wiederum bevorzugt Polyurethanschaum eingesetzt. Zum Ausschäumen des Hohlraumes sind durch die Schenkel des Winkelprofils oder durch den Abschnitt der umfänglichen Rippe, mit dem die axiale Rippe stirnseitig verbunden ist, zwei Öffnungen, eine als Einspritzöffnung zum Einspritzen des Schaumstoffes in den Hohlraum und eine als Entlüftungsöffnung zum Entlüften des Hohlraumes beim Einspritzen des Schaumstoffes, vorgesehen. Hierzu kann die Einspritzöffnung zweckmäßigerweise in dem Abschnitt der umfänglichen Rippe vorgesehen sein.

Die Verbindungsvorrichtung kann beispielsweise umfängliche Bänder aufweisen, die über die Außenseite der Außenschale gelegt und gespannt werden. Bevorzugt weist die Verbindungsvorrichtung jedoch eine Schraubverbindung auf, die die Formteile der Außenschale und damit der mit der Außenschale form- und kraftschlüssig verbundene Wärmedämmung bzw. Isoliersystem in umfänglicher Richtung miteinander verbindet und vorzugsweise zudem verspannt. Hierzu kann die Schraubverbindung Zapfen aufweisen, die so an der Außenseite und nahe der Teilungsebene der Außenschale befestigt sind sowie sich bevorzugt senkrecht zur Richtung der zu erwartenden maximalen Kraft und damit hier parallel zur Teilungsebeneradial nach außen hin erstrecken, dass sie sich paarweise gegenüberstehen. Die Zapfen können eine Schraubenöffnung in umfänglicher Richtung aufweisen, durch die Schrauben zur Verbindung der jeweils paarweise gegenüberstehenden Zapfen geführt und verschraubt sind. Hierbei kann bevorzugt eine zusätzliche Kontermutter oder eine Sicherungsscheibe zur Sicherung der Schraubverbindung vorgesehen sein. Die Schraubverbindung kann zusätzlich über eine Federeinrichtung vorgespannt sein, um hierüber einen Ausgleich von thermisch bedingten Größenänderungen der Formteile zu ermöglichen. Die Federeinrichtung kann hierzu mindestens eine Tellerfeder aufweisen, die bevorzugt zwischen Schraubenkopf und der zum Schraubenkopf benachbarten Seitenfläche des Zapfens angeordnet ist. Hierdurch kann zudem gewährleistet werden, dass die Schraubverbindung die Formteile mit etwa gleich bleibenden Zugkräften zusammenhält. Anstatt oder zusätzlich zur Tellerfeder kann vorgesehen sein, dass eine den Spalt überspannende Zugfeder die Halbschalen der Formteile zusammenspannt, wobei die Zugfeder ebenfalls von Zapfen gleich der der o.a. Schraubenverbindung gehalten werden kann.

Die innere Aufnahme kann bevorzugt aus Edelstahl gefertigt sein. Wegen des Vorteiles gleicher Werkstoffeigenschaften, wie Wärmedehnung, Schweißverhalten und Korrosionsverhalten, sollte die innere Aufnahme aus dem gleichen Werkstoff wie der in dem Festpunkt-Rohrlager gelagerte Rohrleitungsabschnitt gefertigt sein. Zur Verminderung der Herstellungskosten ist es ausreichend, dass die äußere Aufnahme und Außenschale aus einem unlegierten, bevorzugt mit einem Oberflächenschutz versehenen Stahl gefertigt sind, wobei bevorzugt beide, Aufnahme und Außenschale, den gleichen Stahl aufweisen sollten. Hierbei wird als Oberflächenschutz eine Feuerverzinkung bevorzugt.

In einer Weiterbildung des Isoliersystems können zumindest die in Einbaulage nach außen weisenden Oberflächen der Wärmedämmung mit einer kryogenischen Dampfsperre aus Elastomermastix versiegelt sein. Bevorzugt sind zumindest die nach außen weisenden Oberflächen der Wärmedämmung feuerhemmend ausgelegt.

Die nach außen weisende Oberfläche der Wärmedämmung können mit einer laminierten Aluminium/Polyester-Folie versiegelt sein. Hierzu kann die Aluminium/Polyester-Folie bevorzugt mit der Oberfläche verklebt sein. In einer Weiterbildung kann die Folie so bemessen sein, dass sie in Einbaulage eine bauseitig angrenzende Rohrleitungsisolierung zumindest teilweise überdeckt. Hierdurch wird auch die radiale Fuge zwischen Festpunkt-Rohrlager und angrenzender Rohrleitungsisolierung überdeckt.

Zweckmäßigerweise kann die Außenschale zur Fixierung des Festpunkt-Rohrlagers mit ihrer Außenseite fest mit der Basis verbunden sein. Hierzu kann die Basis beispielsweise drei U-Profile aufweisen, die in axialer Richtung und um 90° versetzt um die Außenschale angeordnet sind und die mit ihren freien Schenkelenden an der Außenschale angreifen. Wegen der zu erwartenden hohen auftretenden Kräfte ist die Außenschale zweckmäßigerweise mit der Basis verschweißt.

Zweckmäßigerweise kann hierbei vorgesehen sein, dass die Teilungsebene so angeordnet ist, dass sie in einem etwa 45°-Mittelpunktswinkelabstand zwischen zwei U-Profilen endet. Ist hingegen lediglich ein Angriffspunkt der Basis, beispielsweise ein U-Profil, an die Außenseite der Außenschale vorgesehen, so sollte die Teilungsebene zur symmetrischen Kräfte- und Momentenübertragung in einem Mittelpunktswinkel von 90° versetzt zur Basis angeordnet sein. Selbstverständlich kann die Teilungsebene auch in einem beliebig anderen Mittelpunktswinkelabstand zur Basis positioniert sein.

Die vorliegende Erfindung wird in der Zeichnung beispielhaft veranschaulicht und im Folgenden anhand der Figuren detailliert beschrieben, in der entsprechende Bauteile mit gleichen Bezugszeichen versehen sind. Es zeigen:
- Fig. 1: eine perspektivische Ansicht eines kälteisolierten Festpunkt-Rohrlagers in einer ersten Ausführungsform,
- Fig. 2: eine perspektivische Ansicht eines kälteisolierten Festpunkt-Rohrlagers in einer zweiten Ausführungsform,
- Fig. 3: eine perspektivische Darstellung von Teilen des Fest- punkt-Rohrlagers gemäß Fig. 1 in einer Explosionszeich- nung,
- Fig. 4: eine perspektivische Ansicht einer Halbschale einer Wärmedämmung des Rohrlagers gemäß Fig. 1, jedoch ohne einen sich axial erstreckenden Überstand,
- Fig. 5: eine Querschnittsansicht des Festpunkt-Rohrlagers (ge- mäß Fig. 1 mit zusätzlichen seitlichen Basiselementen,
- Fig. 6: in einer Seitenansicht einen Ausschnitt V gemäß Fig. 4, und
- Fig. 7: eine innere Aufnahme gemäß Fig. 3, jedoch in zwei Hälf- ten geteilt.

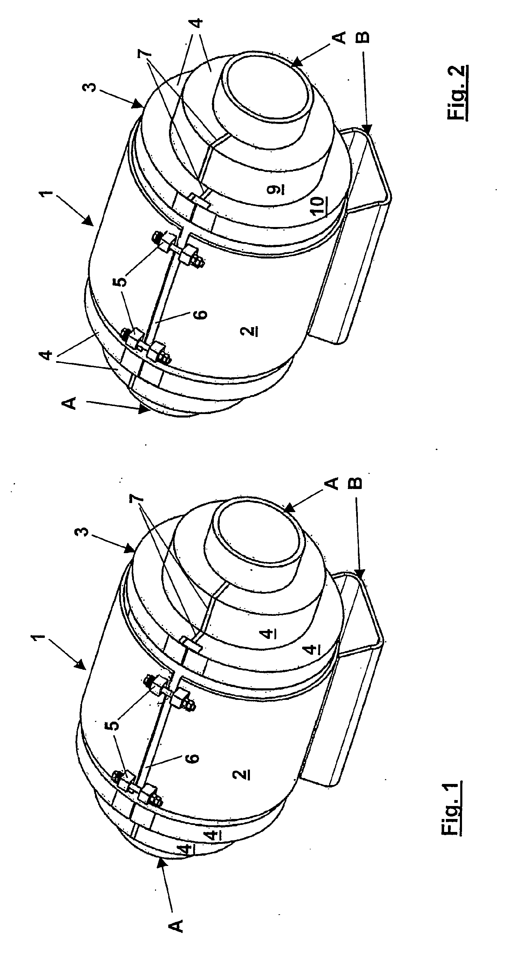

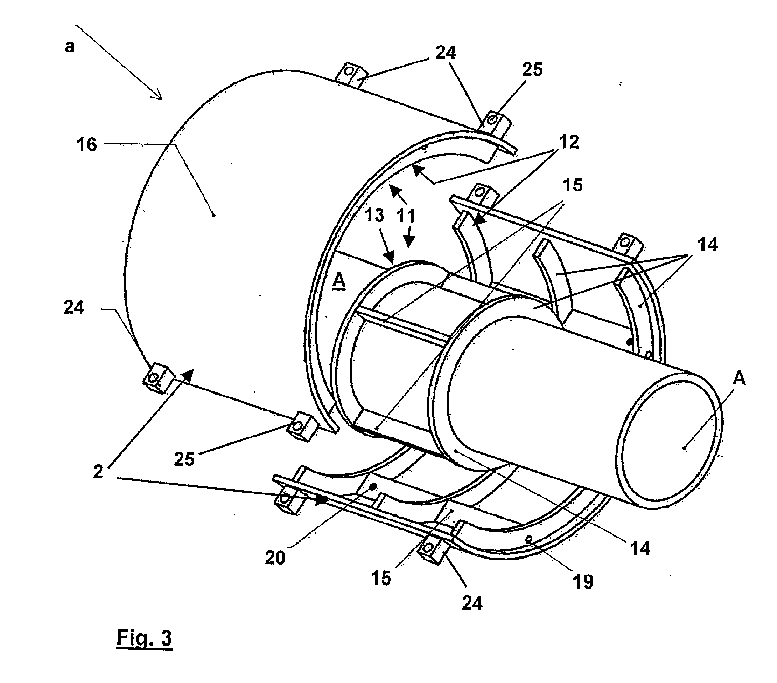

In Fig. 1 wird in leichter perspektivischer Aufsicht ein kälteisoliertes Festpunkt-Rohrlager 1 für eine Tieftemperatur-Rohrleitung A sowie ein durch das Rohrlager 1 führende Abschnitt der Rohrleitung A und ein zur Basis B zugehöriger Fuß C dargestellt. In Einbaulage des Rohrlagers 1 ist der Fuß C fest mit der Basis B und dem Rohrlager 1 verbunden. Das Rohrlager 1 weist eine Außenschale 2 und ein zwischen Außenschale 2 und Rohrleitung A angeordnetes Isoliersystem 3, das die in dem Rohrlager 1 lagerbare Tieftemperatur-Rohrleitung A thermisch gegenüber der Umgebung isoliert. Die Stirnflächen der Wärmedämmung 4 weisen einen stufenförmigen Aufbau auf, der zum Anschluss an eine hier nicht dargestellte Isolierung eines hier nicht dargestellten anschließenden Abschnitt der Rohrleitung A dient, indem die hier nicht dargestellte Isolierung die Wärmedämmung 4 stirnseitig überlappt. Das Isoliersystem 3 weist eine Wärmedämmung 4 auf, das aus einem ausgelagerten und ausgehärteten Polyurethan-Schaumstoffblock geschnitten ist. Die Außenschale 2 und die Wärmedämmung 4 sind jeweils in zwei Halbschalen 16 geschnitten, deren Teilungsebene E senkrecht zur Querschnittsebene verläuft und die Längsachse des koaxial aufgebauten Festpunkt-Rohrlagers 1 enthält. Die beiden Halbschalen 16 der Außenschale 2 werden über eine als Schraubverbindung 5 ausgebildete Verbindungsvorrichtung lösbar miteinander verbunden. Zur Montage des Rohrlagers 1 auf der Rohrleitung A sind die Halbschalen 16 der Außenschale 2 und der Wärmedämmung 4, wie in Fig. 3, einer Explosionszeichnung des Rohrlagers 1 ohne Wärmedämmung 4, ersichtlich, seitlich auf die Rohrleitung A in einer radialen Montagerichtung a aufbringbar und über die Schraubverbindung 5 gegeneinander pressbar. Hierbei sind die Halbschalen 16 der Außenschale 2 so dimensioniert, dass ihre benachbarten axialen Seitenflächen durch einen Spalt 6 beabstandet sind, der durch die Schraubverbindung 5 überbrückt wird. Über ein Anziehen der Schraubverbindung 5 ist somit ein gewünschter Druck einstellbar, mit dem die Außenschale 2 auf das Isoliersystem 3 bzw. auf die Wärmedämmung 4 einwirkt und mit dem das Festpunkt-Rohrlager 1 gehalten wird. Hierdurch können eventuelle thermisch bedingte Volumenänderungen der Außenschale 2 sowie des Isoliersystems 3 in umfänglicher und radialer Richtung ausgeglichen werden. Die in der Teilungsebene liegenden Seitenflächen der Halbschalen 16 bilden eine Fuge 7, deren exakterer Aufbau weiter unten beschrieben werden wird. Die Fuge 7 ist in einem Mittelpunktswinkelabstand von etwa 45° verdreht zur Basis B angeordnet, wodurch insbesondere bei einer Anordnung von mehreren Festpunkt-Rohrlagern 1 nebeneinander eine bessere Zugänglichkeit zur Schraubverbindung 5 erzielt wird. Es ist jedoch aus dem Aufbau des Festpunkt-Rohrlager 1 leicht ersichtlich, dass prinzipiell jeder andere Mittelpunktswinkelabstand möglich ist.

In Fig. 2 wird in einer leichten perspektivischen Aufsicht eine weitere Ausführungsform des Festpunkt-Rohrlagers 1 gezeigt. Abweichend von der in Fig. 1 dargestellten Ausführungsform des Festpunkt-Rohrlagers 1, weist die in Fig. 2 dargestellte Ausführungsform eine zweischalige Wärmedämmung 4 mit einer inneren Dämmschale 9 und einer äußeren Dämmschale 10 auf, wobei die beiden Dämmschalen 9, 10 um einen bestimmten Mittelpunktswinkelbetrag gegeneinander verdreht angeordnet sind. Hierdurch werden die beiden durch die Dämmschalen 9, 10 gebildeten Fugen 8 umfänglich gegeneinander verschoben, sodass der direkte Pfad von außen zur Rohrleitung A durch die Fuge 7 unterbrochen ist. Hierbei ist es jedoch notwendig, dass die beiden Dämmschalen 9, 10 zur Ausbildung des Festpunkt-Rohrlager 1 verdrehfest ineinander angeordnet sind, welches beispielsweise durch eine hier nicht weiter dargestellte Klebung oder durch hier ebenfalls nicht dargestellte Verzahnung, Verhakung und/oder Verrastung beider aneinander grenzender Oberflächen der Dämmschalen 9, 10 erzielt werden kann.

Die weiteren Figuren 3 bis 7 beziehen sich auf die in Fig. 1 gezeigte Ausbildung des Festpunkt-Rohrlagers, wobei hier jedoch hier zur klareren Darstellung der stufenförmigen Aufbau der Stirnflächen der Wärmedämmung 4 fortgelassen wurde.

Fig. 3 zeigt neben dem Abschnitt der Rohrleitung A die Halbschalen 16 der Außenschale 2 sowie eine Verdreh- und Verschiebesicherung 11 gegen eine Verdrehen und Verschieben der Wärmedämmung 4 bezüglich der Rohrleitung A und der Außenschale 2. Die Verdreh- und Verschiebesicherung 11 weist eine äußere Aufnahme 12 und eine innere Aufnahme 13 für das Isoliersystem 3 bzw. für die Wärmedämmung 4 auf, wobei die äußere Aufnahme 12 mit der Außenschale 2 und die innere Aufnahme 13 mit der Rohrleitung A verschweißt ist. Beide Aufnahmen 12, 13 weisen umfänglich verlaufende Rippen 14 und axial verlaufende Rippen 15 auf. Hierbei liegen die axialen Rippen 15 mit ihren Stirnseiten jeweils an einer Seitenfläche der umfänglichen Rippen 14 an und sind fest damit verbunden. Die axialen Rippen 15 sind über den Umfang gleichmäßig mit einem Mittelpunktswinkelabstand von 90° verteilt. Hierbei sind die axialen Rippen 15, wie in Fig. 3 durch die Positionierung der Bauteile zueinander angedeutet, der inneren Aufnahme 13 gegenüber den axialen Rippen 15 der äußeren Aufnahme 12 um einen Mittelpunktswinkelabstand von 45° gegeneinander verdreht.

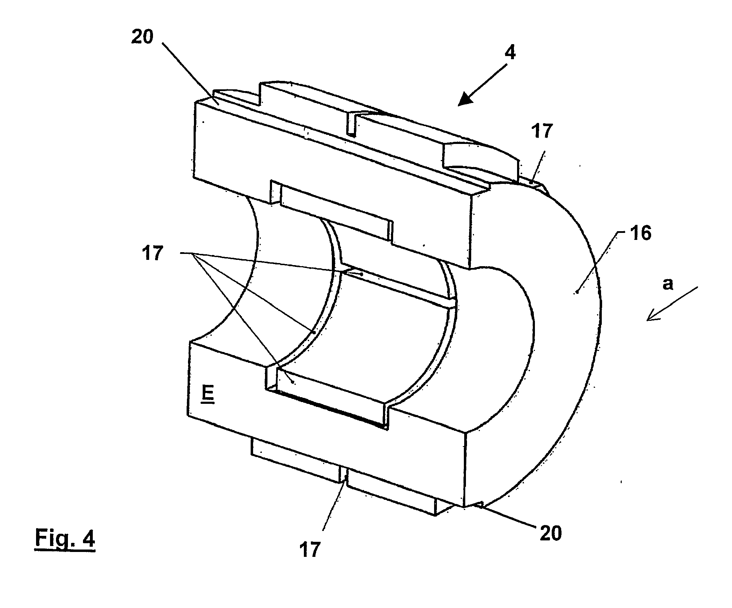

In Fig. 4 ist eine Halbschale 16 der Wärmedämmung 4 in perspektivischer Darstellung gezeigt. Hierbei weist die Halbschale an ihrer radial innen liegenden und radial außen liegenden Oberfläche nutenförmige Ausnehmungen 17 auf, in die in Einbaulage die Rippen 14,15 der äußeren Aufnahme 12 und der inneren Aufnahme 13 zur dreh- und verschiebesicheren Lagerung der Halbschale 16 zwischen den Aufnahme 12, 13 auf.

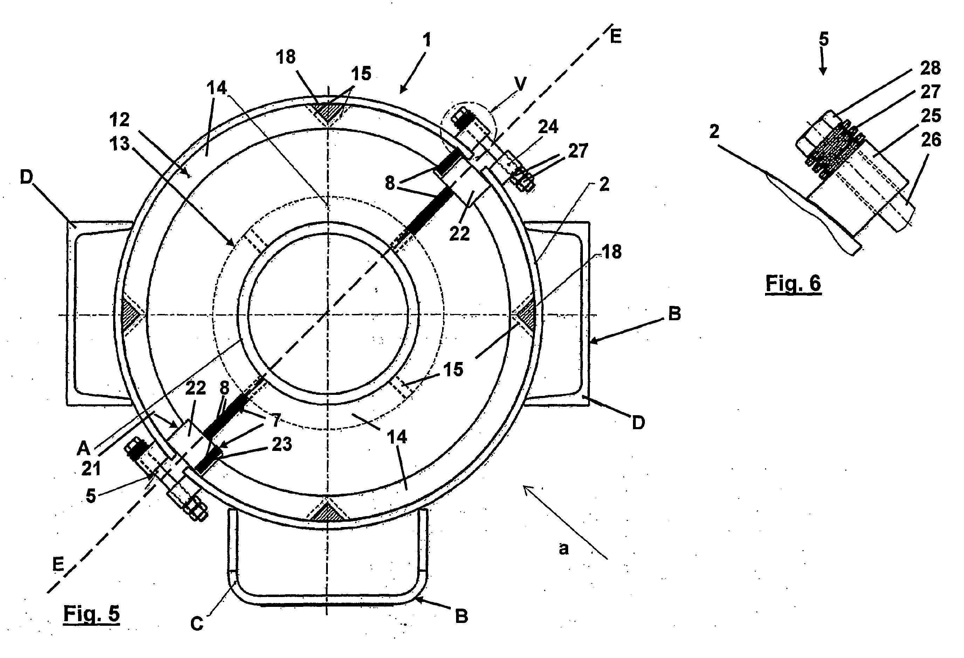

Fig. 5 zeigt eine Querschnittsansicht des Festpunkt-Rohrlagers 1 gemäß Fig. 1, wobei das Rohrlager 1 hier jedoch zusätzlich zu dem Fuß C über zwei seitliche Stützen D fest mit der Basis B verschweißt ist. Hierbei greifen Fuß C und Stützen D jeweils mit ihren freien Schenkelenden an der Außenschale 2 des Rohrlagers 1 an. Deutlich sichtbar in Fig. 4 ist die relative Lage der jeweils vier axialen Rippen der äußeren Aufnahme 12 und der inneren Aufnahme 13, wobei, wie bereits erwähnt, diese um einen Mittelpunktswinkel von 45° versetzt angeordnet sind. Zwei der axialen Rippen 15 der inneren Aufnahme 13 sind in der gemeinsamen Teilungsebene E von Außenschale 2 und Wärmedämmung 4 angeordnet, während die beiden axialen Rippen 15 der inneren Aufnahme 13 senkrecht hierzu positioniert sind. Dadurch wird vermieden, dass die axialen Rippen 15 der inneren Aufnahme 13 in Hinsicht auf die Montagerichtung a zum Aufbringen der Halbschalen 16 der Wärmedämmung 4 keine Hinterschneidung ausbilden, die bei der Montage die Wärmedämmung 4 beschädigen oder ein zusätzliches Formstück fordern würde.

Die um 45° versetzt angeordneten axialen Rippen 15 der äußeren Aufnahme 12 weisen ein gleichschenkliges, rechtwinkliges Winkelprofil auf, wobei die beiden Schenkel des Winkelprofils mit ihren freien Enden mit der Innenseite der Außenschale 2 verbunden sind und unter Einschließung eines Hohlraumes 18 zwischen Winkelprofil und Innenseite der Außenschale 2 radial nach innen zusammenlaufen. Damit verlaufen die äußeren, zur Wärmedämmung 4 hinweisenden Flächen des Winkelprofils jeweils senkrecht oder parallel zur Teilungsebene E, sodass die Hälften der äußeren Aufnahmen senkrecht zur Teilungsebene E in Montagerichtung a auf die Wärmedämmung 4 aufbringbar bzw. von der Wärmedämmung 4 abziehbar sind, ohne hierzu eine Hinterschneidung aufzuweisen. Der Hohlraum 18 ist mit einem Polyurethan-Schaumstoff ausgeschäumt, wozu in der Stirnseite der axialen Rippen 15 der äußeren Aufnahme 12 eine Einspritzöffnung zum Einspritzen des Schaumstoffes in den Hohlraum 18 und in der Wandung eine Entlüftungsöffnung 20 zum Entlüften des Hohlraumes 18 beim Einspritzen des Schaumstoffes vorgesehen sind.

Die Fugen 8 sind mit einer elastischen Dichtungsmasse 8 gefüllt, um hierüber einerseits zu verhindern, dass Luftfeuchtigkeit in das Innere der Wärmedämmung 4 gelangt, die dort gefrieren und die Wärmedämmung 4 zerstören würde, und um andererseits thermisch bedingte Volumenänderungen der Außenschale 2 und der Wärmedämmung 4 auszugleichen. Die Fugen 7 stoßen radial nach innen auf die dort vorgesehene axiale Rippe 15 der inneren Aufnahme 13, wodurch eine weitere Barriere gegenüber einem Eindringen von Luftfeuchtigkeit geschaffen wird. An dem radial äußeren Enden der Fugen 7 ist jeweils eine stufenförmige, sich beidseitig erstreckende Fugenverbreiterung 21 vorgesehen, in die ein weiteres der Fugenverbreiterung 21 angepasstes und sich entsprechend der Fuge 7 in axialer Richtung erstreckendes Teilstück 22 der Wärmedämmung 4 eingesetzt ist. Dieses Teilstück 22 überdeckt den unverbreiterten Abschnitt der Fuge 7. Hierbei liegt das Teilstück 22 mit einer seiner beiden umfänglichen Seitenflächen an der Wärmedämmung 4 an, während seine andere, umfängliche Seitenfläche und die Wärmedämmung 4 eine radiale Teilfuge 23 einschließen. Diese Teilfuge 23 ist ebenfalls wie die übrige Fuge 7 mit einer elastischen Dichtungsmasse 8 aus Elastomermastix gefüllt. Hierdurch wird insgesamt ein stufiger Aufbau der Fuge 7 mit der Teilfuge 23 erzielt, der ein Eindringen von Luftfeuchtigkeit in die Wärmedämmung 4 verhindert.

Der Aufbau der Schraubverbindung 5 wird in Fig. 1 und insbesondere in den Fig. 5 und 6 deutlich gezeigt. Hierzu weist die Schraubverbindung 5 Zapfen 24 auf, die an der Außenseite und nahe der Teilungsebene E der Außenschale 2 befestigt sind und sich senkrecht zur Richtung der zu erwartenden maximalen Kraft und damit im wesentlichen parallel zur Teilungsebene E nach außen erstrecken, sodass sie sich bezüglich der Teilungsebene E paarweise gegenüber stehen. Die Zapfen 24 weisen jeweils eine sich in Umfangsrichtung streckende Schraubenöffnung 25 auf, durch die eine Schraube 26 zur Verbindung der jeweils paarweise gegenüberstehenden Zapfen 24 geführt und mit einer Schraubenmutter 27 verschraubt ist. Eine zusätzliche Schraubenmutter 27 dient zur Konterung der Schraubverbindung 5. Die Schraubverbindung 5 ist über eine hier als Tellerfedern 28 ausgebildete Federeinrichtung vorgespannt, wobei sich die Tellerfedern 28 zwischen dem Schraubenkopf 29 der Schraube 26 und der zum Schraubenkopf 29 benachbarten Seitenfläche des Zapfens 25 angeordnet ist und sich dort abstützen, wodurch die Schraubverbindung vorgespannt wird. Hierdurch wird gewährleistet, dass die Schraubverbindung 5 die beiden Halbschalen 16 der Außenschale 2 unter etwa gleich bleibenden Zugkräften zusammenhält, sodass die Halbschalen 16 einen etwa gleichmäßig bleibenden Druck zum Zusammenhalt und zur Fixierung des Isoliersystems 3 bzw. der Wärmedämmung 4 auf der mit der Rohrleitung A verschweißten inneren Aufnahme 13 ausübt.

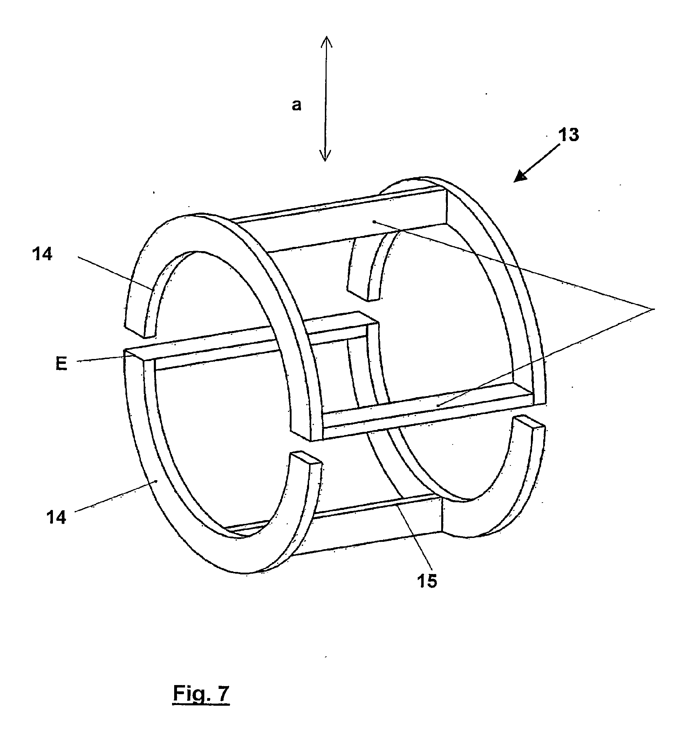

In Fig. 7 wird in einer Einzeldarstellung die innere Aufnahme 13 mit ihren beiden Hälften gezeigt, wobei die Teilungsebene E, wie bereits zuvor beschrieben, so verläuft, dass jeweils eine axiale Rippen 15 einer Hälfte in der Teilungsebene E verläuft, während die andere axiale Rippen 15 der jeweiligen Hälfte der inneren Aufnahme 13 senkrecht dazu verläuft.

### Bezugszeichenliste

- 1: Festpunkt-Rohrlager
- 2: Außenschale
- 3: Isoliersystem
- 4: Wärmedämmung
- 5: Schraubverbindung
- 6: Spalt
- 7: Fuge
- 8: Dichtungsmasse
- 9: innere Dämmschale
- 10: äußere Dämmschale
- 11: Verdreh- und Verschiebesicherung
- 12: äußere Aufnahme
- 13: innere Aufnahme
- 14: umfängliche Rippe
- 15: axiale Rippen
- 16: Halbschale
- 17: Ausnehmung
- 18: Hohlraum
- 19: Einspritzöffnung
- 20: Entlüftungsöffnung
- 21: Fugenverbreiterung
- 22: Teilstück
- 23: Teilfuge
- 24: Zapfen
- 25: Schraubenöffnung
- 26: Schraube
- 27: Schraubenmutter
- 28: Tellerfeder
- 29: Schraubenkopf

- A: Rohrleitung
- B: Basis
- C: Fuß
- D: Stütze
- E: Teilungsebene
- a: Montagerichtung

## Patentansprüche

1. Kälteisoliertes Festpunkt-Rohrlager für eine Rohrleitung (A), insbesondere für eine Tieftemperaturrohrleitung, das zur Aufnahme und Weitergabe axial und radial wirkender Rohrleitungskräfte und -Momente auf der Rohrleitung (A) sowie auf einer Basis (B) fixierbar ist, mit einem zwischen Außenschale (2) und lagerbarer Tieftemperaturrohrleitung angeordneten Isoliersystem (3), das eine Wärmedämmung (4) aus festem Isolationswerkstoff aufweist und die lagerbare Tieftemperaturrohrleitung thermisch von der Umgebung isoliert, und mit einer Verdreh- und Verschiebesicherung gegen ein Verdrehen und Verschieben der Wärmedämmung (4) bezüglich der lagerbaren Tieftemperaturrohrleitung und der Außenschale (2), wobei die Verdreh- und Verschiebesicherung eine äußere Aufnahme (12) und eine innere Aufnahme (13) für das Isoliersystem (3) aufweist, wobei die äußere Aufnahme (12) fest mit der Außenschale (2) und die innere Aufnahme (13) in Arbeitslage fest mit der Rohrleitung (A) verbunden ist, das Festpunkt-Rohrlager (1) in einer im wesentlichen radialen Montagerichtung (a) über die Rohrleitung (A) montier- und demontierbar ist, das Festpunkt-Rohrlager (1) mindestens eine Formteilung aufweist, deren Teilungsebene (E) senkrecht zur Querschnittsebene verläuft, und das Festpunkt-Rohrlager (1) eine verbindungsvorrichtung zur lösbaren Verbindung und Fixierung der durch die Formteilung gebildeten Formteile miteinander aufweist, **dadurch gekennzeichnet, dass** die Aufnahmen (12,13) jeweils mindestens zwei von einander beabstandet angeordnete umfängliche Rippen (14) und vier übe den Umfang gleichmäßig verteilt angeordnete axiale Rippen (15) aufweisen, wobei die axialen Rippen (15) mit ihren Stirnseiten jeweils an eine Seitenfläche der umfänglichen Rippen (14) anliegen und fest damit verbunden sind, und dass die Aufnahmen (12,13) jeweils in zwei Aufnahmehälften geteilt sind, wobei ihre jeweilige Teilungsebene (E) senkrecht zur Querschnittsebene verläuft und die Längsachse der Aufnahmen enthält.

2. Festpunkt-Rohrlager nach Anspruch 1, **dadurch gekennzeichnet, dass** die Längsachse des Festpunkt-Rohrlagers (1) in der Teilungsebene (E) liegt.

3. Festpunkt-Rohrlager nach Anspruch 1 oder 2, **dadurch gekennzeichnet, dass** Wärmedämmung (4) und Außenschale (2) eine gemeinsame Teilungsebene (E) aufweisen.

4. Festpunkt-Rohrlager nach einem der Ansprüche 1 bis 3, **dadurch gekennzeichnet, dass** die Wärmedämmung (4) zwei Halbkreisschalen aufweist, deren in Teilungsebene (E) liegenden Seitenflächen über eine Fuge (7) aneinandergrenzen.

5. Festpunkt-Rohrlager nach Anspruch 4, **dadurch gekennzeichnet, dass** die Fuge (7) mit einer elastischen Dichtungsmasse (8) gefüllt ist.

6. Festpunkt-Rohrlager nach Anspruch 4, **dadurch gekennzeichnet, dass** die Fuge (7) aus mehreren abgestuften radialen und axialen Teilfugen (23) aufgebaut ist, wobei die radialen Teilfugen (23) mit einer elastischen Dichtungsmasse (8) gefüllt sind und die in den axialen Teilfugen (23) angrenzenden Seitenflächen der Schalen aneinander anliegen.

7. Festpunkt-Rohrlager nach Anspruch 6, **dadurch gekennzeichnet, dass** an dem radial äußeren Ende der Fugen (7) jeweils eine stufenförmige, beidseitige Fugenverbreiterung (21) vorgesehen ist, in die ein weiteres, der Fugenverbreiterung (21) angepasstes und sich in axialer Richtung erstreckendes Teilstück (22) der Wärmedämmung (4) eingesetzt ist.

8. Festpunkt-Rohrlager nach einem der Ansprüche 1 bis 7, **dadurch gekennzeichnet, dass** die Wärmedämmung (4) in axialer Richtung über der Außenschale (2) übersteht.

9. Festpunkt-Rohrlager nach einem der Ansprüche 1 bis 8, **dadurch gekennzeichnet, dass** die Wärmedämmung (4) einen mehrschaligen, koaxialen Aufbau aufweist.

10. Festpunkt-Rohrlager nach einem der Ansprüche 1 bis 9, **dadurch gekennzeichnet, dass** die Wärmedämmung (4) aus einem vorgefertigten Polyurethan-Schaumstoffblock geschnitten ist oder direkt in ihre vorbestimmte Form ausgeschäumt ist.

11. Festpunkt-Rohrlager nach einem der Ansprüche 1 bis 10, **dadurch gekennzeichnet, dass** die Aufnahmen jeweils mindestens eine umfänglich verlaufende Rippe (14) und mindestens eine axial verlaufende Rippe (15) aufweisen und dass das Isoliersystem (3) mit an die Rippen (14,15) angepassten Ausnehmungen (17) versehen ist, in die die Rippen (14,15) in Einbaulage eingreifen.

12. Festpunkt-Rohrlager nach Anspruch 11, **dadurch gekennzeichnet, dass** sich die Rippen (14,15) der äußeren Aufnahme (12) radial nach innen und die Rippen (14,15) der inneren Aufnahme (13) radial nach außen erstrecken.

13. Festpunkt-Rohrlager nach einem der Ansprüche 1 bis 12, **dadurch gekennzeichnet, dass** jeweils eine der umfänglichen, in der Teilungsebene (E) liegenden Stirnflächen der Aufnahmeteile der inneren Aufnahme (13) durch eine der axialen Rippen (15) gebildet wird.

14. Festpunkt-Rohrlager nach einem der Ansprüche 1 bis 13, **dadurch gekennzeichnet, dass** die axialen Rippen (15) der äußeren Aufnahme (12) in einem Mittelpunktswinkelabstand von 45° zur Teilungsebene (E) angeordnet sind.

15. Festpunkt-Rohrlager nach Anspruch 14, **dadurch gekennzeichnet, dass** die axialen Rippen (15) der äußeren Aufnahme (12) als gleichschenkliges, rechtwinkliges Winkelprofil ausgebildet sind, wobei die beiden Schenkel des Winkelprofils mit ihren freien Enden mit der Innenseite der Außenschale (2) verbunden sind und unter Einschließung eines Hohlraumes (18) zwischen Winkelprofil und Innenseite der Außenschale (2) radial nach innen zusammenlaufen.

16. Festpunkt-Rohrlager nach Anspruch 14 und 15, **dadurch gekennzeichnet, dass** der Hohlraum (18) mit Wärme isolierendem Kunststoff ausgeschäumt ist.

17. Festpunkt-Rohrlager nach einem der Ansprüche 1 bis 16, **dadurch gekennzeichnet, dass** die Verbindungsvorrichtung eine Schraubverbindung (5) aufweist, die die Formteile in umfänglicher Richtung miteinander verbindet.

18. Festpunkt-Rohrlager nach Anspruch 17, **dadurch gekennzeichnet, dass** die Schraubverbindung (5) Zapfen (24) aufweist, die so an der Außenseite und nahe der Teilungsebene (E) der Außenschale (2) befestigt sind und sich radial nach außen erstrecken, dass sie sich paarweise gegenüberstehen, wobei die Zapfen (24) in umfänglicher Richtung eine Schraubenöffnung (25) aufweisen, durch die Schrauben (26) zur Verbindung der jeweils paarweise gegenüberstehenden Zapfen (24) geführt und verschraubt sind.

19. Festpunkt-Rohrlager nach Anspruch 17 oder 18, **dadurch gekennzeichnet, dass** die Schraubverbindung (5) über eine Federeinrichtung vorgespannt ist.

20. Festpunkt-Rohrlager nach Anspruch 19, **dadurch gekennzeichnet, dass** die Federeinrichtung mindestens eine Tellerfeder (28) aufweist, die zwischen Schraubenkopf (29) und der zum Schraubenkopf (29) benachbarten Seitenfläche des Zapfens (24) angeordnet ist.

21. Festpunkt-Rohrlager nach einem der Ansprüche 1 bis 20, **dadurch gekennzeichnet, dass** die innere Aufnahme (13) aus Edelstahl gefertigt ist.

22. Festpunkt-Rohrlager nach einem der Ansprüche 1 bis 20, **dadurch gekennzeichnet, dass** die äußere Aufnahme (12) und Außenschale (2) aus feuerverzinktem Stahl gefertigt sind.

23. Festpunkt-Rohrlager nach einem der Ansprüche 1 bis 22, **dadurch gekennzeichnet, dass** als Teil des Isoliersystems (3) zumindest die in Einbaulage nach außen weisenden Oberflächen der Wärmedämmung (4) mit einer kryogenischen Dampfsperre aus Elastomermastix versiegelt sind.

24. Festpunkt-Rohrlager nach einem der Ansprüche 1 bis 23, **dadurch gekennzeichnet, dass** die nach außen weisenden Oberflächen der Wärmedämmung (4) mit einer laminierte Aluminium/Polyester-Folie versiegelt sind.

25. Festpunkt-Rohrlager nach Anspruch 24, **dadurch gekennzeichnet, dass** die Folie so bemessen ist, dass sie in Einbaulage eine bauseitig angrenzende Rohrleitungsisolierung zumindest teilweise überdeckt.

26. Festpunkt-Rohrlager nach einem der Ansprüche 1 bis 25, **dadurch gekennzeichnet, dass** die Außenschale (2) zur Fixierung des Festpunkt-Rohrlagers mit ihrer Außenseite fest mit der Basis (B) verbunden ist.

## Claims

1. A cold-insulated fixed-point pipe support for a pipeline (A), in particular for a low-temperature pipeline, which for absorbing and transmitting axially and radially acting pipeline forces and moments can be fixed on the pipeline (A) and on a base (B), comprising an insulating system (3) which is arranged between an outer shell (2) and a supportable low-temperature pipeline and which has a thermal insulation (4) of solid insulating material and thermally insulates the supportable low-temperature pipeline from the environment, and comprising a rotation-preventing and displacement-preventing means for preventing rotation and displacement of the thermal insulation (4) with respect to the supportable low-temperature pipeline and the outer shell (2), which has an outer receiving means (12) and an inner receiving means (13) for the insulating system (3), wherein the outer receiving means (12) is fixedly connected to the outer shell (2) and the inner receiving means (13) in the working position is fixedly connected to the pipeline (A), the fixed-point pipe support (1) is adapted to be fitted and removed in a substantially radial fitting direction (a) over the pipeline (A), the fixed-point pipe support (1) has at least one division in respect of shape, the division plane (E) of which extends perpendicularly to the cross-sectional plane, and the fixed-point pipe support (1) has a connecting device for releasably connecting and fixing the shaped parts formed by the division in respect of shape, **characterised in that** the receiving means (12, 13) respectively have at least two peripheral ribs (14) arranged at a mutual spacing and four axial ribs (15) arranged distributed uniformly over the periphery, wherein the axial ribs (15) respectively bear with their ends against a side face of the peripheral ribs (14) and are fixedly connected thereto, and the receiving means (12, 13) are respectively divided into two receiving means halves, wherein their respective division plane (E) extends perpendicularly to the cross-sectional plane and contains the longitudinal axis of the receiving means.

2. A fixed-point pipe support according to claim 1 **characterised in that** the longitudinal axis of the fixed-point pipe support (1) lies in the division plane (E).

3. A fixed-point pipe support according to claim 1 or claim 2 **characterised in that** the thermal insulation (4) and the outer shell (2) have a common division plane (E).

4. A fixed-point pipe support according to one of claims 1 to 3 **characterised in that** the thermal insulation (4) has two semicircular shells whose side faces which are disposed in the division plane (E) adjoin each other by way of a joint (7).

5. A fixed-point pipe support according to claim 4 **characterised in that** the joint (7) is filled with an elastic sealing material (8).

6. A fixed-point pipe support according to claim 4 **characterised in that** the joint (7) is made up of a plurality of stepped radial and axial joint portions (23), wherein the radial joint portions (23) are filled with an elastic sealing material (8) and the side faces of the shells, which adjoin in the axial joint portions (23), bear against each other.

7. A fixed-point pipe support according to claim 6 **characterised in that** there is provided at the radially outer end of the joints (7) a respective step-shaped joint enlargement (21) at both sides, into which is fitted a further portion (22) of the thermal insulation (4), which portion (22) is adapted to the joint enlargement (21) and extends in the axial direction.

8. A fixed-point pipe support according to one of claims 1 to 7 **characterised in that** the thermal insulation (4) projects in the axial direction beyond the outer shell (2).

9. A fixed-point pipe support according to one of claims 1 to 8 **characterised in that** the thermal insulation (4) is of a multi-shell coaxial structure.

10. A fixed-point pipe support according to one of claims 1 to 9 **characterised in that** the thermal insulation (4) is cut out of a prefabricated polyurethane foam block or is foamed directly into its predetermined form.

11. A fixed-point pipe support according to one of claims 1 to 10 **characterised in that** the receiving means each have at least one peripherally extending rib (14) and at least one axially extending rib (15) and the insulating system (3) is provided with recesses (17) which are adapted to the ribs (14, 15) and into which the ribs (14, 15) engage in the installed condition.

12. A fixed-point pipe support according to claim 11 **characterised in that** the ribs (14, 15) of the outer receiving means (12) extend radially inwardly and the ribs (14, 15) of the inner receiving means (13) extend radially outwardly.

13. A fixed-point pipe support according to one of claims 1 to 12 **characterised in that** a respective one of the peripheral end faces, which are disposed in the division plane (E), of the receiving portions of the inner receiving means (13) is formed by one of the axial ribs (15).

14. A fixed-point pipe support according to one of claims 1 to 13 **characterised in that** the axial ribs (15) of the outer receiving means (12) are arranged at a centre point angular spacing of 45° relative to the division plane (E).

15. A fixed-point pipe support according to claim 14 **characterised in that** the axial ribs (15) of the outer receiving means (12) are in the form of an isosceles, right-angled angular profile, wherein the two limbs of the angular profile are connected with their free ends to the inside of the outer shell (2) and come together radially inwardly enclosing a hollow space (18) between the angular profile and the inside of the outer shell (2).

16. A fixed-point pipe support according to claim 14 and claim 15 **characterised in that** the hollow space (18) is foam-filled with heat-insulating plastic material.

17. A fixed-point pipe support according to one of claims 1 to 16 **characterised in that** the connecting device has a screw connection (5) which connects the shaped parts together in the peripheral direction.

18. A fixed-point pipe support according to claim 17 **characterised in that** the screw connection (5) has projections (24) which are fixed to the outside and close to the division plane (E) of the outer shell (2) and extend radially outwardly in such a way that they are disposed in opposite relationship in pairs, wherein the projections (24) in the peripheral direction have a screw opening (25) through which screws (26) are passed and screwed for connecting the respective projections (24) which are disposed in opposite relationship in pairs.

19. A fixed-point pipe support according to claim 17 or claim 18 **characterised in that** the screw connection (5) is biased by way of a spring device.

20. A fixed-point pipe support according to claim 19 **characterised in that** the spring device has at least one plate spring (28) which is arranged between the screw head (29) and the side face of the projection (24), that is adjacent to the screw head (29).

21. A fixed-point pipe support according to one of claims 1 to 20 **characterised in that** the inner receiving means (13) is made from high-quality steel.

22. A fixed-point pipe support according to one of claims 1 to 20 **characterised in that** the outer receiving means (12) and the outer shell (2) are made from pot-galvanised steel.

23. A fixed-point pipe support according to one of claims 1 to 22 **characterised in that** as part of the insulating system (3) at least the surfaces of the thermal insulation (4), which face outwardly in the installed position, are sealed with a cryogenic vapour barrier of elastomer mastic.

24. A fixed-point pipe support according to one of claims 1 to 23 **characterised in that** the outwardly facing surfaces of the thermal insulation (4) are sealed with a laminated aluminium/polyester film.

25. A fixed-point pipe support according to claim 24 **characterised in that** the film is of such a dimension that in the installed condition it at least partially covers over a pipeline insulation adjoining it at the construction side.

26. A fixed-point pipe support according to one of claims 1 to 25 **characterised in that** the outer shell (2) is fixedly connected to the base (B) for fixing the fixed-point pipe support, with its outside.

## Revendications

1. Porte-tuyau à point de fixation et isolé à froid pour une conduite (A), notamment pour une conduite à basse température, ledit porte-tuyau étant fixable sur la conduite (A) ainsi que sur une base (B), pour la réception et transmission de forces et moments de la conduite agissant axialement et radialement, comprenant un système d'isolation (3) disposé entre une enveloppe extérieure (2) et la conduite à basse température apte à être logé, ledit système d'isolation (3) comprenant une isolation thermique (4) en un matériau isolant ferme et isolant thermiquement la conduite à basse température apte à être logé des environs, et comprenant un dispositif d'assurage contre une rotation et déplacement de l'isolation thermique (4) par rapport à la conduite à basse température apte à être logé et l'enveloppe extérieure (2) qui comporte un logement extérieur (12) et un logement intérieur (13) pour le système d'isolation (3), ledit logement extérieur (12) étant relié de manière fixe à l'enveloppe extérieure (2) et le logement intérieur (13) étant relié de manière fixe à la conduite (A) en position de travail, le porte-tuyau à point fixe (1) pouvant être monté et démonté par la conduite (A) en une direction de montage essentiellement radiale (a), ledit porte-tuyau à point fixe (1) ayant d'au moins un joint dont le plan de séparation (E) s'étend verticalement au plan de la section transversale, et le porte-tuyau à point fixe (1) comportant un dispositif de connexion pour la connexion détachable et la fixation des pièces formées par le plan de séparation l'une à l'autre, **caractérisé en ce que** les logements (12, 13) chacun comportent d'au moins deux nervures (14) circonférentielles écartées l'une de l'autre et quatre nervures axiales (15) réparti régulièrement sur la circonférence, lesdites nervures axiales (15) chacune restant avec ses faces contre une surface latérale des nervures circonférentielles (14) et étant reliées auxquelles d'une manière fixe, et **en ce que** chacun des logements (12, 13) est séparé en deux demi-logements, le plan de séparation(E) desquels s'étendant verticalement au plan de la section transversale et incluant l'axe longitudinal des logements.

2. Porte-tuyau à point de fixation selon la revendication 1, **caractérisé en ce que** l'axe longitudinal du porte-tuyau à point de fixation (1) est situé dans le plan de séparation(E).

3. Porte-tuyau à point de fixation selon la revendication 1 ou 2, **caractérisé en ce que** l'isolation thermique (4) et l'enveloppe extérieure (2) ont un plan de séparation(E) commun.

4. Porte-tuyau à point de fixation selon l'une des revendications 1 à 3, **caractérisé en ce que** l'isolation thermique (4) comporte deux enveloppes semi-circulaires, dont les faces latérales situées dans le plan de séparation (E) se côtoient par un joint (7).

5. Porte-tuyau à point de fixation selon la revendication 4, **caractérisé en ce que** le joint (7) est rempli d'un matériel de garniture élastique (8).

6. Porte-tuyau à point de fixation selon la revendication 4, **caractérisé en ce que** le joint (7) est construit de plusieurs joints partiaux radiaux et axiaux (23) et disposés en terrasses, lesdites joints partiaux radiaux (23) étant rempli d'un matériel de garniture et les faces latérales des enveloppes dans les joints axiaux (23) étant voisine l'une à l'autre.

7. Porte-tuyau à point de fixation selon la revendication 6, **caractérisé en ce que** sur l'extrémité extérieure radiale des joints (7) est respectivement prévue un élargissement des joints (21) des deux côtés en forme de terrasses, dans lequel est inséré un autre tronçon (22) de l'isolation thermique (4), lequel tronçon étant adapté à l'élargissement des joints (21) et étendant en la direction axiale.

8. Porte-tuyau à point de fixation selon l'une des revendications 1 à 7, **caractérisé en ce que** l'isolation thermique (4) surmonte l'enveloppe extérieure (2) en la direction axiale.

9. Porte-tuyau à point de fixation selon l'une des revendications 1 à 8, **caractérisé en ce que** l'isolation thermique (4) a une structure coaxiale à plusieurs enveloppes.

10. Porte-tuyau à point de fixation selon l'une des revendications 1 à 9, **caractérisé en ce que** l'isolation thermique (4) est coupée d'un bloc en mousse de polyuréthane ou est donné sa forme prédestinée par moussage.

11. Porte-tuyau à point de fixation selon l'une des revendications 1 à 10, **caractérisé en ce que** les logements comporte chacun au moins une nervure circonférentielle (14) et au moins une nervure axiale (15) et **en ce que** le système d'isolation (3) est muni des exclusions (17) adaptées aux nervures (14, 15), lesdites exclusions étant engagée par les nervures (14, 15) dans la position installée.

12. Porte-tuyau à point de fixation selon la revendication 11, **caractérisé en ce que** les nervures (14, 15) du logement extérieur (12) s'étendent radialement vers l'intérieur et les nervures (14,15) du logement intérieur (13) s'étendent radialement vers l'extérieur.

13. Porte-tuyau à point de fixation selon l'une des revendications 1 à 12, **caractérisé en ce qu'**une chacun des faces circonférentielles situées dans le plan de séparation (E) des pièces de logement du logement intérieur (13) est formée par une des nervures (15).

14. Porte-tuyau à point de fixation selon l'une des revendications 1 à 13, **caractérisé en ce que** les nervures axiales (15) du logement extérieur (12) sont arrangées à une distance d'angle au centre de 45° par rapport au plan de séparation (E).

15. Porte-tuyau à point de fixation selon la revendication 14, **caractérisé en ce que** les nervures axiales (15) du logement extérieur (12) sont configurés comme une cornière orthogonale à ailes légales, les deux ailes de la cornière étant reliées à la face intérieure de l'enveloppe extérieure (2) par ses extrémités libres et convergeant radialement vers l'intérieur en incluant un creux (18) entre la cornière et la face intérieure de l'enveloppe (2).

16. Porte-tuyau à point de fixation selon les revendications 14 et 15, **caractérisé en ce que** le creux (18) est moussé d'une matière plastique isolante.

17. Porte-tuyau à point de fixation selon l'une des revendications 1 à 16, **caractérisé en ce que** le dispositif de connexion (16) comporte une connexion à vissage (5) reliant les pièces l'une à l'autre en la direction circonférentielle.

18. Porte-tuyau à point de fixation selon la revendication 17, **caractérisé en ce que** la connexion à vissage (5) comporte des tenons (24) qui sont fixés sur l'extérieur et près du plan de séparation (E) de l'enveloppe extérieure (2) et qui s'étendent radialement vers l'extérieur de la sorte qu'ils sont situés vis à vis l'un à l'autre par paires, les tenons (24) comportant en la direction circonférentielle une bouche à vis (25) à travers de laquelle sont passés et vissés des vis (26) pour la connexion des tenons (24) situés vis à vis l'un à l'autre par paires.

19. Porte-tuyau à point de fixation selon la revendication 17 ou 18, **caractérisé en ce que** la connexion à vis (5) est précontraint par un dispositif de ressort.

20. Porte-tuyau à point de fixation selon la revendication 19, **caractérisé en ce que** le dispositif de ressort comporte au moins un ressort à disque (28) qu'est arrangé entre la tête de vis (29) la face latérale du tenon (24) voisine à la tête de vis (29).

21. Porte-tuyau à point de fixation selon l'une des revendications 1 à 20, **caractérisé en ce que** le logement intérieur (13) est fabriqué en acier spécial.

22. Porte-tuyau à point de fixation selon l'une des revendications 1 à 20, **caractérisé en ce que** le logement extérieur (12) et l'enveloppe extérieure (2) sont fabriqués en acier galvanisé.

23. Porte-tuyau à point de fixation selon l'une des revendications 1 à 22, **caractérisé en ce que** comme une partie du système d'isolation (3), au moins les surfaces de l'isolation thermique (4) qui montrent vers l'extérieur dans sa position installée sont cachetées d'une barrière vapeur cryogénique en une matrice élastomère.

24. Porte-tuyau à point de fixation selon l'une des revendications 1 à 22, **caractérisé en ce que** comme une partie du système d'isolation (3), au moins les surfaces de l'isolation thermique (4) qui montrent vers l'extérieur dans sa position installée sont cachetées d'une feuille laminée d'aluminium ou polyester.

25. Porte-tuyau à point de fixation selon la revendication 24, **caractérisé en ce que** la feuille est dimensionnée de sorte qu'elle en sa position installée couvre au moins partiellement l'isolation thermique d'un tuyau adjacent en place.

26. Porte-tuyau à point de fixation selon l'une des revendications 1 à 25, **caractérisé en ce que** l'enveloppe extérieure (2), pour la fixation du porte-tuyau à point de fixation, est attachée par sa face extérieure à la base (B).
